# EUROPÄISCHE PATENTSCHRIFT

(11) **EP 2 183 509 B1**
(45) Veröffentlichungstag und Bekanntmachung des Hinweises auf die Patenterteilung: **06.03.2013**
(21) Anmeldenummer: 08803294.1
(22) Anmeldetag: 28.08.2008
(51) Int. Cl.: F16K 3/08

(54) **VORRICHTUNG ZUR DROSSELUNG DES FREIEN QUERSCHNITTES EINER DAMPFLEITUNG ODER DERGLEICHEN**
DEVICE FOR THROTTLING THE FREE CROSS SECTION OF A STEAM PIPE OR THE LIKE
DISPOSITIF DE RESTRICTION DE LA SECTION TRANSVERSALE LIBRE D'UNE CONDUITE DE VAPEUR OU ANALOGUE

(30) Priorität: 04.09.2007 DE 102007041753
(43) Veröffentlichungstag der Anmeldung: 12.05.2010
(73) Patentinhaber: Weinhold, Karl, 41464 Neuss (DE)
(72) Erfinder: Weinhold, Karl, 41464 Neuss (DE)
(74) Vertreter: Albrecht, Ralf
(86) Internationale Anmeldenummer: PCT/EP2008/061268
(87) Internationale Veröffentlichungsnummer: WO 2009/030629

(56) Entgegenhaltungen:
- DE-A1- 3 421 653
- DE-C- 345 092
- FR-A- 1 335 039
- GB-A- 296 164
- NL-C2- 1 003 615
- US-A- 3 232 578

## Beschreibung

Die Erfindung betrifft eine Vorrichtung zur manuellen Regulierung der Durchflussmenge von Dampfleitungen nach dem Oberbegriff von Anspruch 1.

Drosselgehäuse sind in unterschiedlichster Ausgestaltung seit Langem bekannt und werden beispielsweise im Rohrleitungs-, Anlagen- und Kesselbau eingesetzt. So ist aus der DE 102 36 118 A1 eine Drosselarmatur bekannt, in der ein in einem Drosselgehäuse axial verschiebbarer Kolben in den freien Querschnitt der Rohrleitung hineinfahren kann, um ihn auf das gewünschte Maß zu reduzieren. Während die bekannte Drosselarmatur zwar in Richtung der Rohrleitung relativ klein baut, ist die Baugröße senkrecht zur Rohrleitung im Bereich des Drosselgehäuses außerordentlich groß.

Gattungsgemäße Vorrichtungen zur Regulierung der Durchflussmenge sind aus der NL 1 003 615 C2, der FR 1 335 039 A1 und der DE 345 092 C bekannt. Bei diesen Vorrichtungen kann jedoch der Druck in der Leitung bei einer Fehlbedienung unkontrolliert ansteigen.

Der Erfindung liegt daher die Aufgabe zugrunde, eine Vorrichtung der eingangs genannten und zuvor näher beschriebenen Art so auszugestalten und weiterzubilden, dass bei einfachem konstruktiven Aufbau und geringem Wartungsaufwand eine besonders platzsparende Vorrichtung geschaffen wird. Darüber hinaus soll die Vorrichtung einen modularen Aufbau aufweisen.

Erfindungsgemäß wird die vorgenannte Aufgabe bei einer Vorrichtung der eingangs genannten Art durch die kennzeichnenden Mermale von Anspruch 1 gelöst.

Die erfindungsgemäße Vorrichtung, im Folgenden kurz als Drosselarmatur bezeichnet, wird bevorzugt bei Dampfleitungen eingesetzt, um die Durchflussmenge zu regulieren. Hierdurch wird vermieden, dass mit vorhandenen Absperrhähnen oder Dampfpistolen ein Drosselzustand erzeugt wird, der in diesen Armaturen zu einer Temperaturerhöhung führen würde, welche die Dichtringe in den Absperrelementen zerstört. Bei der erfindungsgemäßen Drosselarmatur bleibt immer eine Mindestdurchflussmenge erhalten. Die Drosselarmatur soll also nicht als Absperrelement dienen, sondern nur für den Einsatz als Drosselelement bestimmt sein. Sie eignet sich insbesondere auch als Schleichdampfdrossel.

Gemäß einer weiteren Lehre der Erfindung ist als Mitnahmeelement mindestens ein am Kolben befestigter und radial nach außen weisender Stift vorgesehen, welcher in einer Ausnehmung im Drosselgehäuse verschwenkbar ist. Auf diese Weise lässt sich durch Drehen des Kolbens mittels dem Stift die Querschnittsveränderung und damit die Durchflussmenge sehr feinfühlig regulieren.

Eine weitere Ausgestaltung der Erfindung sieht vor, dass zur Betätigung des Stiftes eine äußere Hülse mit einer Ausnehmung zur Aufnahme des Stiftes vorgesehen ist, wobei die Hülse drehbar um das Drosselgehäuse angeordnet ist. Diese Ausgestaltung ist besonders vorteilhaft, da der Stift innerhalb der Ausnehmung in der Hülse "verschwindet", also nicht nach außen vorsteht und somit, beispielsweise beim Einbau in Dampfschläuchen bei deren Bewegung nicht beschädigt oder gar zerstört werden kann.

Die Erfindung schlägt mehrere Alternativen zur Ausbildung der Hülse vor, zunächst kann die Hülse mit radialen Bohrungen zur Aufnahme eines Hakenschlüssels versehen sein. Alternativ ist es auch möglich, die Hülse mit wenigstens zwei diametral gegenüberliegend angeordneten planen Flächen zur Aufnahme eines Maulschlüssels auszubilden. Beide dargestellten Alternativen sind besonders klein bauend, benötigen jedoch zur Verstellung regelmäßig ein Werkzeug (Hakenschlüssel bzw. Maulschlüssel), da die Hülse auf dem Drosselgehäuse gegen selbständiges Verdrehen stabilisiert werden muss, damit sie sich nicht von selbst in ihrer Position verändert. Hier übernimmt die Hülse also gleichzeitig die Funktion eines Reibrings.

Eine weitere Alternative der erfindungsgemäßen Drosselarmatur sieht vor, dass die Hülse mit einem zusätzlichen Handrad versehen ist. Diese Ausführung eignet sich daher besonders für den stationären Einbau.

Als weitere mögliche Ausführungsform ist die Hülse mit einem Isolationskörper versehen. Eine solche Ausbildung ist besonders zweckmäßig, da sie einerseits klein baut und andererseits einen Schutz gegen Verbrennung für die Bedienperson darstellt.

In weiterer Ausgestaltung der Erfindung ist vorgesehen, dass das Drosselgehäuse zweiteilig ausgebildet ist und ein Hauptelement sowie ein Halteelement umfasst. Hierbei weist das Hauptelement eine exzentrische Bohrung zur Aufnahme des Kolbens auf, der dann mittels dem Halteelement im Hauptelement axial festlegbar ist.

Um sicherzustellen, dass kein Medium über die Ausnehmung im Drosselgehäuse nach außen gelangen kann, weist der Kolben endseitig angeordnete umlaufende Nuten zur Aufnahme von Dichtringen auf.

Je nach Ausbildung der erfindungsgemäßen Vorrichtung kann zwischen Drosselgehäuse und Hülse ein zusätzlicher Reibring vorhanden sein, um die einmal eingestellte Position des Kolbens und damit die gewählte Durchflussmenge beizubehalten.

Je nach geometrischer Verteilung der exzentrischen Anordnung des Kolbens und/oder der exzentrischen Anordnung der Längsbohrung im Kolben reicht eine Vierteldrehung aus, um die Querschnittsfläche dosiert von der Stellung "geöffnet" in dies Stellung "voll gedrosselt" zu bringen. Dazu verläuft die Ausnehmung im Drosselgehäuse über etwa ein Viertel seines Umfangs.

Einlass und Auslass des Drosselgehäuses können sowohl als Anschweißenden ausgebildet sein, oder aber mit einem Innen-und/oder Außengewinde versehen sein, je nachdem für welchen Verwendungszweck die jeweilige Drosselarmatur vorgesehen ist.

Die Erfindung wird nachfolgend anhand einer lediglich bevorzugte Ausführungsbeispiele darstellenden Zeichnung näher erläutert. In der Zeichnung zeigen
- Fig. 1A-1C: ein erstes Ausführungsbeispiel der erfindungsgemäßen Vorrichtung,
- Fig. 2A-2C: ein zweites Ausführungsbeispiel der erfindungsgemäßen Vorrichtung,
- Fig. 3A-3C: ein drittes Ausführungsbeispiel der erfindungsgemäßen Vorrichtung und
- Fig. 4A-4C: ein weiteres Ausführungsbeispiel der erfindungsgemäßen Vorrichtung.

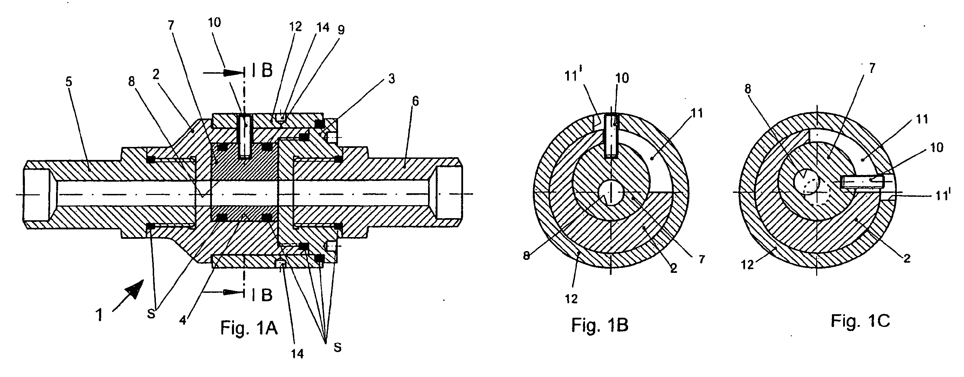

Alle vier dargestellten Ausführungsbeispiele weisen den gleichen Grundaufbau auf. Sie bestehen zunächst und im Wesentlichen aus einem Drosselgehäuse 1, welches jeweils aus einem Hauptelement 2 und einem Halteelement 3 besteht. Im Hauptelement 2 befindet sich eine exzentrisch angeordnete Bohrung 4 und das Drosselgehäuse ist ferner mit eine Einlass 5 und einem Auslass 6 versehen, wie aus den Fig. 1a, 2A, 3A und 4A zu entnehmen ist. Die exzentrisch angeordnete Bohrung 4 im Hauptelement 2 jedes Drosselgehäuses 1 dient zur Aufnahme eines Kolbens 7, welcher wiederum mit einer exzentrisch angeordneten Bohrung 8 versehen ist. Axial wird der (Dreh-)Kolben 7 im Inneren des Drosselgehäuses 1 vom Halteelement 3 im Hauptelement 2 festgelegt. Dazu weisen das Hauptelement 2 und das Halteelement 3 korrespondierende (nicht näher bezeichnete) Gewinde auf, so dass das Halteelement wie ein Stopfen in das Hauptelement 2 hineingeschraubt werden kann. Auch hier, wie an den weiteren Stoßstellen, sorgen Dichtringe S für die nötige Abdichtung. Nicht näher bezeichnete diametral gegenüberliegende Bohrungen im Halteelement 3 erlauben die Montage mit einem geeigneten Werkzeug.

In den dargestellten und insoweit bevorzugten Ausführungsbeispielen ist in den Kolben 7 jeweils ein Stift 10 eingelassen und verfügt das Hauptelement 2über eine Ausnehmung 11, welche eine Drehung des Stiftes 10 um einen Winkel von ca. 90° zulässt. Durch die exzentrische Lage des Kolbens 7 und die wiederum exzentrische Anordnung der Bohrung 8 erfolgt eine Verkleinerung des Durchflussquerschnittes, je weiter die Bohrung 8 aus der Fließachse geschwenkt wird. In den Fig. 1B, 2B, 3B und 4B ist die Drosselarmatur in ihrer geöffneten Stellung dargestellt und die Fig. 1C, 2C, 3C und 4C zeigen die Drosselarmatur in der Endstellung, also der Stellung mit dem kleinstmöglichen Querschnitt.

Es ist klar, dass sich durch die Veränderung der Geometrie (Anordnung und Lage der Exzenter, Größe von Kolben 7 oder Bohrung 8, etc.) verschiedene Drosselmöglichkeiten ergeben. So erfolgt im dargestellten und insoweit bevorzugten Ausführungsbeispiel die Drosselung relativ linear. Durch entsprechende Veränderung der Geometrie lässt sich jedoch auch eine Drosselarmatur schaffen, bei der beim Anfang der Drosselbewegung eine starke Verengung des Querschnittes stattfindet, wobei ein noch relativ großer Weg zur (Fein-)Regulierung eines geringen Querschnittes möglich ist. Eine solche Ausführung eignet sich inbesondere als Schleichdampfausführung.

Die Fig. 1A bis C zeigen nun eine Ausführungsform der erfindungsgemäßen Vorrichtung, bei der die Hülse 12 mit Bohrungen 14 versehen ist, um mittels einem (nicht dargestellten) Hakenschlüssel verstellt zu werden.

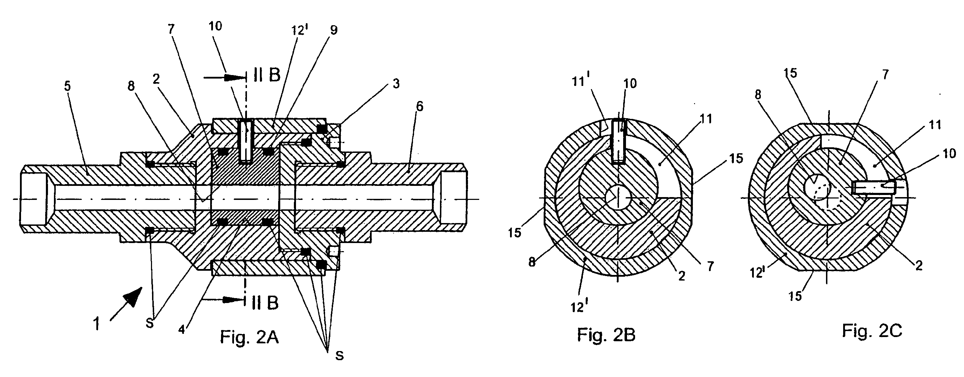

Sehr ähnlich ist die Ausführung gemäß den Fig. 2A bis 2C. Hier sind zwei diametral gegenüberliegende Abschnitte der Hülse 12' abgeflacht ausgeführt, so dass eine Betätigung mittels einem (Maul-)Schlüssel an den so gebildeten Schlüsselflächen 15 möglich ist.

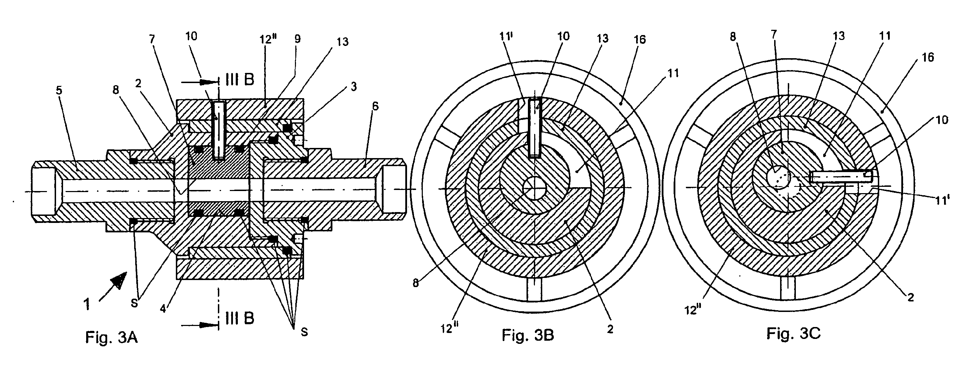

Bei der Ausführungsform gemäß den Fig. 3A bis 3C ist auf der äußeren Hülse 12" ein zusätzliches Handrad 16 vorgesehen, welches zur besseren Übersicht nur in den beiden Querschnittdarstellungen der Fig. 3B und 3C dargestellt ist. Hier sorgt ein zusätzlicher Reibring 13 zwischen Drosselgehäuse 1 und Hülse 12'' dafür, dass sich die einmal gewählte Drosselposition der erfindungsgemäßen Vorrichtung nicht von selbst ändern kann.

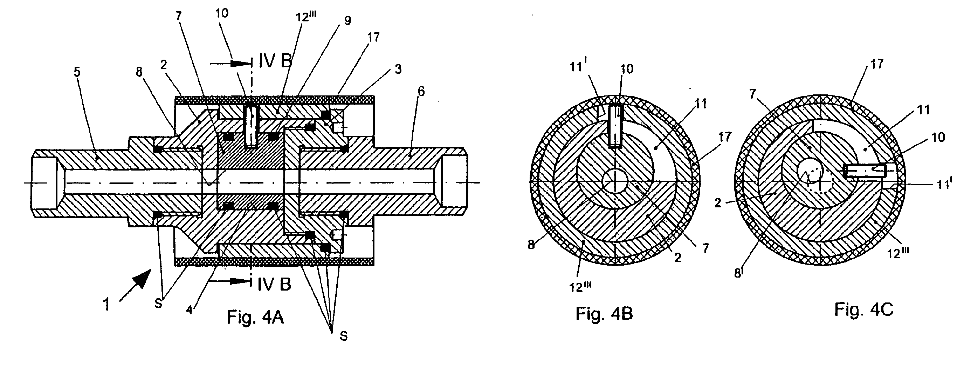

In den Fig. 4A bis 4C ist schließlich eine besonders klein bauende Ausführung der erfindungsgemäßen Drosselarmatur dargestellt, bei der die Hülse 12''' (wie bei den Ausführungen gemäß Figurengruppen 1 und 2) als Reibring wirkt und auf ihrer Außenseite zusätzlich mit einem Isolationskörper 17 als Wärmeschutz ausgebildet ist. Im dargestellten und insoweit bevorzugten Ausführungsbeispiel überdeckt der Isolationskörper 17 auch die Ausnehmung 11' der Hülse 12''', so dass ein Eindringen von Schmutz oder anderen Fremdkörpern zuverlässig ausgeschlossen ist. Diese Ausführung ist auch als äußerst bedienerfreundlich anzusehen, da durch den Isolationskörper Verbrennungen durch direktes Berühren des vom Dampf aufgeheizten Drosselgehäuses 1 ausgeschlossen sind.

Es versteht sich, dass im Rahmen der Erfindung noch weitere Ausführungsmöglichkeiten der erfindungsgemäßen Drosselarmatur denkbar sind, welche nicht von den zuvor nur beispielhaft beschriebenen Ausführungsbeispielen umfasst sind.

## Patentansprüche

1. Vorrichtung zur manuellen Regulierung der Durchflussmenge von Dampfleitungen, mit einem einen Einlass (5) und einen Auslass (6) aufweisenden Drosselgehäuse (1) und einem an dem Drosselgehäuse (1) exzentrisch angeordneten und um seine Längsachse drehbaren Kolben (7), der von außerhalb des Drosselgehäuses (1) über wenigstens ein Mitnahmeelement betätigbar und mit einer exzentrischen Längsbohrung (8) versehen ist, wobei das Drosselgehäuse (1) ein Hauptelement (2) und ein Halteelement (3) aufweist, und wobei der Leitungsquerschnitt nach Drehung um einen vorgegebenen winkel auf einen gewünschten Querschnitt reduziert ist **dadurch gekennzeichnet, dass** der Kolben (7) in einer exzentrisch angeordneten Bohrung (4) innerhalb des Hauptelements (3) aufgenommen ist, dass der Kolben (7) endseitig angeordnete umlaufende Nuten (9) für die Aufnahme von Dichtringen (5) aufweist, und dass in jeder Stellung des bens (7) eine Mindestdurchflussmenge erhalten bleibt.

2. Vorrichtung nach Anspruch 1, **dadurch gekennzeichnet, dass** als Mitnahmeelement wenigstens ein am Kolben (7) befestigter und radial nach außen weisender Stift (10) vorgesehen ist, der in einer Ausnehmung (11) im Drosselgehäuse (1) verschwenkbar ist.

3. Vorrichtung nach Anspruch 2, **dadurch gekennzeichnet, dass** zur Betätigung des Stiftes (10) eine äußere Hülse (12, 12', 12'', 12''') mit einer Ausnehmung (11') zur Aufnahme des Stiftes (10) vorgesehen ist und dass die Hülse (12, 12', 12'', 12''') drehbar um das Drosselgehäuse (1) angeordnet ist.

4. Vorrichtung nach Anspruch 3, **dadurch gekennzeichnet, dass** die Hülse (12) mit radialen Bohrungen (14) zur Aufnahme eines Hakenschlüssels versehen ist.

5. Vorrichtung nach Anspruch 3, **dadurch gekennzeichnet, dass** die Hülse (12') wenigstens zwei diametral gegenüberliegend angeordnete plane Flächen (15) aufweist.

6. Vorrichtung nach Anspruch 3, **dadurch gekennzeichnet, dass** die Hülse (12") mit einem zusätzlichen Handrad (16) versehen ist.

7. Vorrichtung nach Anspruch 3, **dadurch gekennzeichnet, dass** die Hülse (12''') mit einem Isolationskörper (17) versehen ist.

8. Vorrichtung nach einem der Ansprüche 1 bis 7, **dadurch gekennzeichnet, dass** der Kolben (7) mittels dem Halteelement (3) im Hauptelement axial festgelegt ist.

9. Vorrichtung nach einem der Ansprüche 1 bis 8, **dadurch gekennzeichnet, dass** zwischen Drosselgehäuse (1) und Hülse (12") ein Reibring (13) angeordnet ist.

10. Vorrichtung nach einem der Ansprüche 2 bis 9, **dadurch gekennzeichnet, dass** die Ausnehmung (11) über etwa ein Viertel des Umfangs des Drosselgehäuses (1) verläuft.

11. Vorrichtung nach einem der Ansprüche 1 bis 10, **dadurch gekennzeichnet, dass** Einlass (5) und Auslass (6) des Drosselgehäuses (1) als Anschweißenden ausgebildet sind.

12. Vorrichtung nach einem der Ansprüche 1 bis 10, **dadurch gekennzeichnet, dass** Einlass und Auslass des Drosselgehäuses mit Innen- und/oder Außengewinden versehen sind.

## Claims

1. Device for manually regulating the flow quantity of steam pipes or the like, with a throttle housing (1) having an inlet (5) and an outlet (6), and with a piston (7) arranged eccentrically inside the throttle housing (1) and rotatable about its longitudinal axis, which can be activated by at least one carrier element from outside the throttle housing (1) and is provided with an eccentric longitudinal bore (8), wherein the throttle housing (1) has a main element (2) and a retaining element (3), **characterized in that** the piston (7) has peripheral grooves (9) arranged on its ends to hold sealing rings (S), and that in each position of the piston (7) a minimal flow quantity is maintained.

2. Device according to claim 1, **characterized in that** as a carrier element at least one pin (10) is provided that is attached to the piston (7) and points radially outward and is swivelable in a recess (11) in the throttle housing (1).

3. Device according to claim 2, **characterized in that** to activate the pin (10), an outer sleeve (12, 12', 12'', 12''') is provided, with a recess (11') to hold the pin (10) and **in that** the sleeve (12, 12', 12'', 12''') is arranged rotatable about the throttle housing (1).

4. Device according to claim 3, **characterized in that** the sleeve (12) is provided with radial bores (14) to receive a hook wrench.

5. Device according to claim 3, **characterized in that** the sleeve (12') has at least two diametrically opposed planar surfaces (15).

6. Device according to claim 3, **characterized in that** the sleeve (12'') is provided with an additional hand wheel (16).

7. Device according to claim 3, **characterized in that** the sleeve (12''') is provided with an insulation body (17) .

8. Device according to any one of claims 1 to 7, **characterized in that** the piston (7) is axially fixed in the main element (2) by means of the retaining element (3).

9. Device according to any one of claims 1 to 8, **characterized in that** a friction ring (13) is arranged between throttle housing (1) and sleeve (12'').

10. Device according to any one of claims 2 to 9, **characterized in that** the recess (11) runs over approximately one quarter of the periphery of the throttle housing (1).

11. Device according to any one of claims 1 to 10, **characterized in that** the inlet (5) and outlet (6) of the throttle housing (1) are formed weld-on socket pieces.

12. Device according to any one of claims 1 to 10, **characterized in that** inlet and outlet of the throttle housing are provided with internal and/or external threads.

## Revendications

1. Dispositif pour le réglage manuel du débit de conduites de vapeur avec un boîtier de vanne d'étranglement, (1) doté d'un point d'admission (5) et d'un point d'évacuation (6), et un piston (7), disposé de façon excentrique par rapport au boîtier de vanne d'étranglement (1) et pouvant être pivoté autour de son axe longitudinal, qui peut être actionné de par l'extérieur du boîtier de vanne d'étranglement (1) au moyen d'au moins un élément d'entraînement et qui est doté d'une percée longitudinale (8), où le boîtier de vanne d'étranglement (1) présente un élément principal (2) et un élément d'arrêt et où la section transversale de la conduite est réduite à une section transversale souhaitée après avoir été pivotée d'un degré prédéfini, **caractérisé en ce que** le piston (7) est recueilli dans une percée (4) disposée de façon excentrique à l'intérieur de l'élément principal (3), que le piston (7) présente des rainures (9) disposées autour de sos extrémités pour la préhension de bagues d'étanchéité (S), et qu'un débit minimal est conservé peu importe la position du piston (7).

2. Dispositif selon la revendication 1, **caractérisé en ce qu'**au moins une cheville (10), fixée au piston (7) et dirigée radialement vers l'extérieur, sert d'élément d'entraînement et peut être pivotée dans une exclusion (11) située dans le boîtier de vanne d'étranglement (1).

3. Dispositif selon la revendication 2, **caractérisé en ce qu'**une douille extérieure (12, 12', 12", 12''') est prévue pour l'actionnement de la cheville (10) avec une exclusion (11') en vue d'accueillir la cheville (10) et que la douille (12, 12', 12", 12"') est disposée de façon à pivoter autour du boîtier de vanne d' étranglement (1).

4. Dispositif selon la revendication 3, **caractérisée en ce que** la douille (12) est dotée de percées radiales (14) en vue d'y accueillir une clé à crochet.

5. Dispositif selon la revendication 3, **caractérisée en ce que** la douille (12') est dotée d'au moins deux surfaces planes (15) diamétralement opposées.

6. Dispositif selon la revendication 3, **caractérisée en ce que** la douille (12") est dotée d'une roue à main supplémentaire (16).

7. Dispositif selon la revendication 3, **caractérisée en ce que** la douille (12''') est pourvue d'un corps isolant (17).

8. Dispositif selon l'une des revendications 1 à 7, **caractérisé en ce que** le piston (7) est fixé de façon axiale dans l'élément principal au moyen de l'élément d'arrêt (3).

9. Dispositif selon l'une des revendications 1 à 8, **caractérisé en ce qu'**un anneau de friction (13) est disposé entre le boîtier de vanne d'étranglement (1) et la douille (12'').

10. Dispositif selon l'une des revendications 2 à 9, **caractérisé en ce que** l'exclusion (11) s'étend sur approximativement un quart de l'étendue du boîtier de vanne d'étranglement (1).

11. Dispositif selon l'une des revendications 1 à 10, **caractérisé en ce que** le point d'admission (5) et le point d'évacuation (6) du boîtier de vanne d'étranglement (1) sont formés de façon à être soudés.

12. Dispositif selon l'une des revendications 1 à 10, **caractérisé en ce que** le point d'admission et le point d'évacuation du boîtier de vanne d'étranglement sont filetés à l'intérieur comme à l'extérieur.
